# DEMANDE DE BREVET EUROPEEN

(11) **EP 0 560 689 A1**
(43) Date de publication de la demande: **15.09.1993**
(21) Numéro de dépôt: 93400643.8
(22) Date de dépôt: 12.03.1993
(51) Int. Cl.: G06F 9/46

(54) **Utilisation d'un langage de programmation, dont le typage porte sur le contenu des variables, dans un système de gestion d'un réseau**

(30) Priorité: 12.03.1992 FR 9202976
(71) Demandeur: BULL S.A., F-92800 Puteaux (FR)
(72) Inventeur: Attal, Denis, F-92320 Chatillon (FR); Jarossay, Mylène, F-92240 Malakoff (FR)

(57) **Abrégé**

Un langage dans lequel le typage porte sur le contenu des variables plutôt que sur les variables et qui, en outre, permet de manipuler des structures complexes telles que des ensembles ou des arbres est utilisé dans des programmes d'applications de type programmes de gestion d'un réseau. D'une part, sont ainsi créées des interfaces d'accès à des serveurs en autorisant une programmation générique et d'autre part sont créées des interfaces respectant le caractère ensembliste de bases de données relationnelles et le caractère arborescent d'une pluralité de serveurs. Chaque machine du réseau possède un interpréteur INT dudit langage.

## Description

La présente invention concerne l'utilisation d'un langage dans lequel le typage porte sur le contenu des variables plutôt que sur les variables et qui, en outre, permet de manipuler des structures complexes telles que des ensembles ou des arbres.

Traditionnellement, ce type de langage est essentiellement utilisé dans le domaine de l'intelligence artificielle. Au regard des langages classiques, ce type de langage apporte l'objet fonctionnel manipulable sans restriction, une programmation récursive efficace ainsi qu'une gestion automatique de la mémoire programme-données. En outre, grâce à la représentation similaire des programmes et des données, un programme peut s'automodifier pour tenir compte d'événements nouveaux. Cependant, en dehors de son application au domaine de l'intelligence artificielle, son utilisation est mal ressentie et notamment, il existe une foule de préjugés quant à son maniement dans d'autres domaines et notamment dans le domaine des programmes d'applications du type programmes de gestion d'un réseau.

Dans ce dernier domaine, il existe des langages de programmation spécifiques à certaines applications. Ainsi, un langage du type SMALLTALK sera utilisé pour une première famille d'applications dont l'objet est de présenter des interfaces d'accès à des serveurs qui soient simplifiées et qui facilitent une programmation générique, c'est-à-dire dans laquelle la structure des données est manipulée de manière directe sans connaître le contenu des données. En effet, dans ce type de langage, le typage porte sur le contenu des variables plutôt que sur les variables, caractéristique qui permet de répondre efficacement aux problèmes posés par cette première famille d'applications.

Cependant, lorsque il sera désiré créer des interfaces avec des bases de données relationnelles qui ont un caractère ensembliste, c'est un autre type de langage qu'il faudra utiliser, par exemple le langage SQL qui possède également ce caractère ensembliste mais qui lui, par contre, ne permet pas de faciliter une programmation générique. De même, d'autres problèmes sont posés lorsqu'il s'agit de créer des interfaces respectant le caractère arborescent d'une pluralité de serveurs comme par exemple dans les plateformes d'administration de réseaux. Ainsi, à chaque famille d'applications correspond un type de langage adapté. Cette situation est peu pratique et entraîne un manque de souplesse lorsque des programmes d'applications du genre programmes de gestion de réseau doivent être développés pour permettre de créer des interfaces avec des bases de données relationnelles tout en autorisant l'établissement de requêtes vers des serveurs d'informations sans connaître préalablement la structure de la valeur reçue en retour.

La présente invention a pour but de remédier à cet inconvénient majeur et propose l'utilisation d'un langage dans lequel le typage porte sur le contenu des variables et qui, en outre, permet de manipuler des structures complexes.

Pour cela, le langage du type précité est utilisé dans des programmes d'applications du type programmes de gestion d'un réseau destinés d'une part à créer des interfaces d'accès à des serveurs en autorisant une programmation générique et d'autre part à créer des interfaces respectant le caractère ensembliste de bases de données relationnelles et le caractère arborescent d'une pluralité de serveurs, chaque machine du réseau possédant un interpréteur dudit langage.

Ainsi, l'idée de l'invention consiste à utiliser, et ceci contre toute attente, dans des programmes d'applications du type programmes de gestion des réseaux un langage symbolique de programmation conçu pour être appliqué essentiellement au domaine de l'intelligence artificielle. Ce langage, en effet, présente simultanément l'ensemble des caractéristiques désirées pour développer les programmes d'applications ci-avant mentionnés. Contrairement aux solutions de l'art antérieur, un seul langage est utilisé, ce qui confère une grande souplesse et une efficacité considérable. Les programmes peuvent ainsi manipu- lerdes données sans connaître leur contenu, présentant de la sorte une avantageuse généricité, en particulier des requêtes peuvent être adressées à des serveurs d'informations sans connaissance préalable des structures des valeurs reçues en retour, l'interface d'accès avec lesdits serveurs étant bien entendu considérablement simplifiée. Dans un tel langage, en réalité les variables n'ont pas de type car elles sont supposées toutes exister à un état indéterminé et c'est au moment d'une affectation que le type est en même temps fixé, le code s'adaptant aux diverses applications. En outre, grâce à ce langage de très haut niveau, qui a un caractère ensembliste, il est tout à fait simple de créer des interfaces avec différents serveurs d'informations, interfaces qui permettent d'une part de respecter le caractère également ensembliste de langages structurés, tel que SQL autorisant ainsi l'accès à des bases de données relationnelles et d'autre part de respecter le caractère arborescent de certains serveurs utilisés notamment pour des plateformes d'administration de réseaux. Enfin, et par conséquence, l'utilisation d'un tel langage de programmation permet de réduire très significativement le temps de développement d'une application.

Selon une application préférée de la présente invention, le langage utilisé est un langage du type Lisp.

En outre, pour permettre le dialogue selon ce langage entre les diverses machines du réseau, chacune d'entre elles possède un interpréteur dudit langage.

De manière remarquable l'interpréteur du langage de chaque machine est principalement constitué d'un noyau pour traiter le programme à exécuter en s'appuyant aussi bien sur des services internes : évaluateur, gestion mémoire, que sur le code exécutant les fonctions primitives du langage, d'une interface programmatique documentée entre le noyau et le code exécutant les fonctions primitives pour autoriser l'accès à une pluralité de services et faciliter l'extension du langage et de l'interpréteur à de nouvelles fonctions primitives.

Cet interpréteur permet de développer de manière aisée, rapide et efficace une application désirée. Grâce au langage utilisé, les différentes fonctions peuvent être codées (dans un environnement constitué par l'interpréteur et différentes bibliothèques auxquelles l'interpréteur a accès) et testées rapidement sans passer par les phases traditionnelles de compilation-liaison-exécution nécessaires aux autres langages de programmation. Ainsi, le code n'est jamais compilé et lorsque l'interpréteur est appelé, tout code existant est chargé et immédiatement interprété. L'interface programmatique offre l'accès à une pluralité de services, elle doit être claire et documentée pour faciliter avantageusement l'extension du langage et de l'interpréteur lui-même à de nouvelles fonctions primitives offrant, parexemple, l'accès à de nouveaux serveurs.

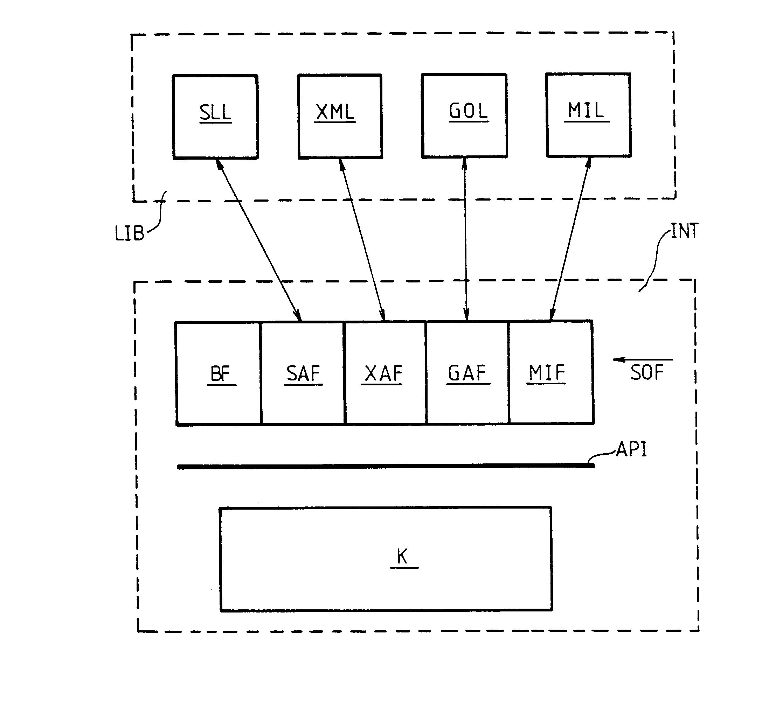

La description suivante en regard du dessin annexé, le tout donné à titre d'exemple non limitatif, fera bien comprendre comment l'invention peut être réalisée.

La figure unique propose un exemple de structure représentant un interpréteur et un ensemble de bibliothèques auxquelles il a accès.

Sur la figure unique, l'interpréteur est référencé INT et l'ensemble de bibliothèques est référencé LIB. L'interpréteur de langage INT est composé principalement d'un noyau K, d'une interface programmatique API et d'un jeu de fonctions SOF mettant en oeuvre les fonctions primitives de l'interpréteur INT. Dans ce jeu de fonctions, deux catégories peuvent être grossièrement distinguées. Une première dans laquelle sont rangées les fonctions de base BF, c'est-à-dire les fonctions propres au langage dont le typage porte sur le contenu des variables et permettant de manipuler des constructions complexes, par exemple et de manière avantageuse, les fonctions de base de Lisp. Une seconde à laquelle appartiennent des fonctions étendues qui assurent l'interface avec différents services représentés sous la référence LIB. Ainsi, dans l'exemple montré figure unique, un jeu de fonctions SAF permet d'accéder à une bibliothèque propre à un langage structuré SLL servant à son tour d'interface avec des bases de données relationnelles (non représentées). Un autre jeu de fonctions XAF permet d'accéder à une bibliothèque XML dont l'objet est de fournir des composants pour développer et gérer des interfaces utilisateur graphiques. Un troisième jeu de fonctions GAF permet d'accéder à une bibliothèque GOL autorisant les applications utilisant les objets graphiques élaborés. Un quatrième jeu de fonctions MIF permet d'accéder une bibliothèque MILservant à son tour d'interface avec des services de gestion de réseaux et systèmes d'informations.

Pour la première ou la seconde catégorie de jeu de fonctions, l'utilisation d'une fonction primitive du langage utilisé selon l'invention (qui est appelé dans la suite dans un but de simplification : langage SML) conduit à l'exécution d'une procédure qui est connue sous le nom de fonction codant la primitive.

Une fonction codant une primitive est elle-même compilée comme le reste de l'interpréteur étant écrite à l'origine par exemple en langage C. Les arguments d'entrée sont reçus en langage SML car ils proviennent d'un dispositif d'appel fonctionnant en langage SML. De même, la valeur retournée vers le dispositif d'appel est toujours en langage SML.

S'agissant de fonctions de base BF (en langage SML), une fois que la fonction codant la primitive a accompli sa tâche, il y a retour vers le dispositif d'appel. Cependant dans le cas où un appel de fonction SML représente une demande d'accès à un des services proposés par l'ensemble LIB, alors la fonction codant la primitive doit réaliser un travail supplémentaire qui généralement conduit à l'exécution des tâches suivantes :
- validation des arguments d'entrée (en langage SML),
- s'il n'y a pas d'erreur, conversion des arguments en langage SMLen arguments en langage de type C,
- appel d'une procédure dans une des bibliothèques externes de l'ensemble LIB fournissant des arguments d'entrée en langage type C,
- après retour de la procédure externe, retour au dispositif d'appel fournissant une valeur de retour en langage SML.

En outre, indépendamment de l'objet de la présente invention, le langage SML permet la mise en oeuvre d'un très grand nombre d'applications dans le domaine de l'informatique distribuée également appelée informatique coopérative.

De manière générale, ce langage présente avantageusement les caractéristiques des langages de type Lisp et se propose de fournir des moyens efficaces et cohérents d'accès, de manipulation et de présentation des informations de gestion de réseaux et systèmes d'informations. Pour cela, il doit respecter les règles principales suivantes :
- les objets gérés sont définis selon les règles du standard ISO.
- les opérations sur les objets gérés sont cohérentes et conformes à celles décrites dans le standard ISO pour l'utilisation des services des réseaux et systèmes d'informations de gestion (voir ISO CMIS).
- l'accès à des bases de données est possible par l'intermédiaire d'un langage structuré tel que SQL.
- l'interface utilisateur, par exemple pour le dialogue ou la visualisation d'informations, est gérée par l'intermédiaire de fonctions permettant l'accès d'une part à des composants de développement et de gestion des interfaces utilisateur graphiques comme par exemple X/Motif et d'autre part aux applications utilisant les objets graphiques élaborés, tel le système Go (Gra- phic Objects).

Le langage SML utilisé selon l'invention est influencé par le langage "Common Lisp" mais ne cherche pas nécessairement à lui être totalement compatible, car le langage SML cherche à atteindre des objectifs fondamentalement différents de ceux de "Common Lisp" ou de tout autre dialecte Lisp. En effet, dans leur ensemble, les dialectes Lisp sont largement utilisés dans le domaine de l'intelligence artificielle, alors que le langage SML est adapté aux programmes d'applications du type programmes de gestion de réseaux. Pour cette raison, il y a sensiblement moins de fonctions de base nécessaires en langage SML que de fonctions proposées dans "Common Lisp" par exemple.

Il existe d'autres différences entre le langage SML et "Common Lisp". Ainsi dans le langage SML, un atome peut avoir une seule valeur alors que les dialectes Lisp classiques permettent, par exemple, qu'un même nom soit donné à une variable et à une fonction sans qu'il y ait un risque de conflit. De même, dans le langage SML, les listes sont manipulées de manière interne comme des tableaux de manière à accélérer les opérations de balayage pour l'analyse et l'exploration des informations.

Il est important également de remarquer que les objets gérés d'une base d'informations de gestion (base qui contient la totalité des informations utiles pour une application donnée) qui ont une structure d'arbre sont facilement représentés sous forme de listes, cette représentation étant obtenue de manière tout à fait naturelle pour le langage SML.

Les bibliothèques externes de l'ensemble LIB sont constituées de procédures compilées écrites à l'origine en langage de type C, mais à la différence des fonctions codant les primitives, elles ignorent les arguments ou objets de type SML. Ces dernières effectuent une conversion des arguments de type SML en langage de type C ou effectuent la conversion inverse et ainsi peuvent être considérées comme des procédures liant les bibliothèques externes de l'ensemble LIB et les fonctions SML.

L'utilisation de fonctions telles que XAF ou MIF est obligatoire d'une part pour permettre à un utilisateur d'avoir accès à toute application et d'autre part pour permettre de retrouver une information contenue dans un service de gestion des réseaux et systèmes d'informations (base de données par exemple). L'utilisation des fonctions GOF bien qu'utile n'est pas obligatoire alors que celle des fonctions SAF n'est jamais obligatoire pour une application. En fait, les fonctions SAF ne sont utilisées que pour permettre de créer et/ou d'accéder à des bases de données relationnelles. La relation avec une telle base de données peut être établie pour une utilisation spécifique à une application ; de même ladite base de données peut être partagée entre plusieurs applications.

L'interface API autorise l'applicaticn de toute fonction SAF, XAF, GAF, MIF par l'intermédiaire d'une fonction BF en langage SML qui entraîne l'exécution d'une fonction codant une primitive SML. Après quelques opérations de vérification et de formatage de base, la fonction codant la primitive SML appelle la fonction adéquate permettant l'accès à l'une des bibliothèques externes de l'ensemble LIB.

En outre, le rôle du noyau K consiste à créer le lien entre un appel d'une fonction SML et une fonction codant une primitive SML. Les fonctions codant les primitives SML de même que les fonctions SAF, XAF, GAF, MIF sont des procédures en langage de type C, avec compilation de code. L'appel de la fonction SML original est, quant à lui, interprété. De manière générale, la phase d'interprétation correspond à moins d'un pour cent du temps d'exécution, la plus grande partie du temps de traitement est passée à l'exécution de codes compilés.

Une caractéristique importante et avantageuse de l'environnement SML tient à sa réactivité aux événements extérieurs. Ainsi, une application SML peut accéder au moyen de l'interface à différents services et requérir que tout événement qui se produit lui soit notifié. Par exemple, l'action d'un utilisateur (sur un clavier, un écran, une souris, ...) pourra être considérée comme un événement spécifique qui "réveille" une application SML permettant d'amorcer un dialogue avec l'utilisateur. Cette opération de "réveil" implique l'exécution de procédures SMLspécifiques, en vue du traitement de l'événement. De telles procédures appelées procédures de rappel ou "callback" sont d'une extrême importance pour le développement de toute application SML.

Une application SML se met en place pour le traitement d'événements après production d'appels vers la source d'événements appropriée et après avoir fourni le nom de la procédure de rappel qui doit être déclenchée quand un événement survient.

Une application SML peut être considérée en fait comme une collection de procédures de rappel. Au démarrage de l'application et après initialisation, celle-ci notifie aux sources d'événements ses exigences en fournissant les noms des procédures de rappels appropriées. Ensuite l'application attend l'apparition desdits événements.

Les événements qui surviennent sont gérés par le noyau K de l'interpréteur SML. Ainsi, le noyau n'est pas seulement responsable des relations entre les appels SML et les fonctions codant les primitives SML mais également du traitement des événements. Lorsqu'un événement provenant d'une source donnée survient, le noyau attend, si besoin est, l'inactivité de l'application et ensuite active la procédure de retour appropriée.

Si une application est en train de traiter un événement et qu'un autre événement survient, le noyau attend l'achèvement de la tâche en cours avant d'activer la procédure de retour correspondant au nouvel événement. Ainsi, des événements peuvent rester en attente de traitement pour une application donnée, le premier dans la file d'attente étant le prochain à traiter. Il n'existe pas de notion de priorité pour le traitement des événements.

Selon les concepts de programmation relatifs à la présente invention, une quelconque application SML, qui doit être développée, doit principalement effectuer les deux tâches essentielles suivantes :
- créer une interface avec l'utilisateur, ce qui implique la visualisation sur l'écran d'objets (fenêtres, boîtes de dialogue, boutons, ...) utilisés pour contrôler le dialogue entre l'utilisateur et l'application,
- retrouver, manipuler et visualiser l'information demandée par l'utilisateur.

Le langage SML fournit l'interface avec les différentes fonctions qui autorisent l'exécution de ces deux tâches essentielles.

L'interface utilisateur est, de manière habituelle, codée pour utiliser des systèmes de développement et de gestion d'interfaces utilisateur graphiques comme par exemple le système connu OSF/Motif-X/Windows (marques déposées respectivement par l'Open Software Foundation et par le M.I.T.). Le langage SML fournit l'interface pour les fonctions XAF compilées accédant à la bibliothèque externe XML, par exemple X/Motif.

Une fois que l'application a déterminé l'information qui est requise par l'utilisateur, elle doit dans l'étape suivante retrouver cette information.

L'ensemble des informations qui doivent être rendues disponibles pour les différentes applications est appelé la base d'informations gérées MIB. Cette base ne consiste pas en un simple répertoire de données, comme l'est une base de données centralisée, mais est de nature conceptuelle car elle représente les informations qui peuvent être fournies lorsqu'elles sont nécessaires.

Retrouver une information dans la base MIB n'implique pas alors une demande d'accès à une base de données. Cela implique la requête d'une information à partir d'un composant qui peut fournir l'information requise. Chacun de ses composants gère une partie de la base MIB.

L'interaction entre une application (composant requérant) et un gestionnaire d'informations (composant fournisseur d'informations) est obtenue au moyen de messages envoyés entre les deux composants. Un gestionnaire répondra à des requêtes d'information en alimentant l'application au moyen de parties d'objets qu'il connaît, le gestionnaire de ces objets étant appelé dans la suite gestionnaire d'objets.

L'environnement dans lequel s'applique l'invention utilise du point de vue sémantique un paradigme "orienté-objet", ce qui signifie qu'un programmeur n'utilisera pas une approche "orientée-procédure". Un objet diffère d'une procédure en ce qu'il est une entité de laquelle peuvent être requises un certain nombre d'actions. Les données propres à un objet ne sont jamais manipulées, de manière directe, par autre chose que l'objet lui-même, il n'y pas de concept de données globales comme, de manière générale, c'est le cas pour le modèle "orienté-procédure".

Pour développer une application dans le présent contexte, utilisant un modèle "orienté-objet", il faut conserver en mémoire qu'une entité qui envoie un message à un objet n'a pas à attendre la fin de traitement du message par l'objet, mais peut, car le fonctionnement est asynchrone, envoyer d'autres messages à d'autres objets tout en attendant la réponse faite au message envoyé au premier objet. Au contraire, lorsqu'une procédure est appelée, le code d'appel bloque tout autre appel tant que ladite procédure n'est pas acquittée, le fonctionnement étant synchrone.

Dans la mise en oeuvre de ces différentes applications, les messages peuvent désigner et être directement appliqués à un objet puisque ce dernier ne traite pas lui-même les messages envoyés par une application, c'est le gestionnaire d'objets qui opère le traitement.

A ce modèle applications et gestionnaires d'objets, il est possible de faire correspondre le modèle client-serveur dans lequel les applications sont les clients et les gestionnaires d'objets les serveurs. Ceci implique seulement que les applications requièrent les services des gestionnaires d'objets. Lorsqu'un gestionnaire d'objets reçoit un message émis par une application, il interprète et traite le message.

Si l'on considère qu'un agent intégrateur est un gestionnaire d'objets qui fournit des informations à une application ayant émis une requête, cet agent intégrateur devra, pour fournir lesdites informations, communiquer via une interface avec un agent (composant généralement d'un autre système) qui gère les valeurs d'attributs d'un objet géré d'une base d'informations de gestion.

Une caractéristique importante d'une application est qu'elle interagit directement avec l'utilisateur ce que ne fait pas un gestionnaire d'objets. Une application reçoit des requêtes par l'intermédiaire de l'interface utilisateur et renvoie les informations vers l'utilisateur, par contre une application ne gère pas les objets, de même qu'elle n'agit pas pour d'autres applications ou d'autres gestionnaires d'objets.

Comme cela a été vu précédemment, une application réagit aux événements, ce qui signifie qu'elle attend effectivement qu'un événement survienne, par exemple l'interaction d'un utilisateur. Cependant, l'application ne génère pas elle-même des événements, ces derniers étant générés uniquement par les gestionnaires d'objets.

Lorsqu'une application est utilisée dans un environnement SML, elle doit se préparer à répondre aux interactions d'un utilisateur. Les demandes d'information d'un utilisateur provoquent des interactions entre l'application et un ou plusieurs gestionnaires d'objets. Ceci implique alors, d'une part, la présence active du ou des gestionnaires et d'autre part que ce ou ces derniers soient prêts à recevoir les messages émis par les applications. Pour cela, les gestionnaires sont toujours prêts à fonctionner et doivent rester activement présents tant que les applications sont actives.

Dans ce contexte, toutes les applications ainsi que les gestionnaires d'objets communiquent entre eux par l'intermédiaire d'infrastructures de communication utilisant des protocoles et des services standards.

Cette infrastructure inclut les services gestionnaires de communications qui à leur tour incluent les services de gestion des réseaux et systèmes d'informations.

Les applications comme les gestionnaires d'objets ont accès aux services de gestion des réseaux et systèmes d'informations (basés sur le standard OSI CMIS). Une application a accès à ces services (CMIS par exemple) par l'intermédiaire de l'interface API au moyen des fonctions BF et MIF puis de la bibliothèque externe MIL qui sert d'interface à son tour aux services tels que CMIS.

Deux importants services peuvent être rendus aux applications concernées par les services de gestion des réseaux et systèmes d'informations tels que CMIS:
- fournir un service d'acheminement ou d'aiguillage entre les applications et les gestionnaires d'objets en déterminant quel gestionnaire doit recevoir un message émis par une application en fonction du type d'objet que l'application spécifie (cette dernière ne sachant pas si le gestionnaire d'objets réside sur le même système ou un système différent).
- proposer aux applications des fonctions qui autorisent l'exécution d'opérations sur les objets gérés d'une base d'objets gérés, les opérations les plus intéressantes étant les suivantes :
   . GET : retrouve des informations d'un objet (les valeurs de ces attributs), ceci est l'opération la plus utilisée.
   . CANCEL GET : permet à une application de notifier aux services de gestion de réseau:< et systèmes d'informations que le nombre de réponses déjà reçues après une opération GET est suffisant, par conséquent tout autre réponse d'un gestionnaire d'objets doit être rejetée.
   . SET : donne aux attributs des objets les valeurs spécifiées.
   . CREATE : crée une instance d'objet.
   . DELETE : supprime une instance d'objet.

Une application ne peut fixer les valeurs d'attributs que si la définition de l'objet autorise cette opération. Ceci est également vrai pour les opérations CREATE et DELETE.

Un exemple (non limitatif) d'un jeu de fonctions BF en langage SML est décrit ci-après quant à certaines conventions d'une part et à sa description syntaxique d'autre part.

### Par convention :

Un symbole littéral indique qu'il est lui-même une donnée plutôt qu'une référence.

Un astérisque ^{*} indique que le symbole qui précède est optionnel et qu'il peut être répété autant de fois que désiré.

Un signe + indique que le symbole qui précède peut être répété autant de fois que désiré mais qu'il doit être présent au moins une fois.

Des accolades {} indiquent que le groupe de symboles entre les crochets est considéré comme un seul terme.

Des crochets [] indiquent que le groupe de symboles entre parenthèses est optionnel.

Une barre de séparation indique qu'il existe plusieurs alternatives.

Tout commentaire commence par un point virgule et termine à la fin de la ligne.

Les nombres sont représentés par 32 bits avec signe et peuvent être notés sous la forme décimale (par défaut), sous la forme hexadécimale (#x ou Ox) ou selon leur code ASCII (#\J).

Les symboles sont des identificateurs qui permettent de nommer des fonctions ou des variables.

Un symbole qui commence par deux points (:) est un motclé. Les mots clé sont utilisés dans la définition des fonctions.

Les symboles dans le langage SML sont monoé- valués, par conséquent un symbole peut se référer à une fonction ou à une variable mais pas aux deux.

Comme dans tout dialecte Lisp, une liste est à la fois une structure de données et une structure de programme. Par défaut, une liste est évaluée et le premier élément doit être une fonction. Une évaluation peut néanmoins être évitée en utilisant la fonction (').

Les listes sont des ensembles extensibles d'éléments consécutifs stockés dans une mémoire et par conséquent n'ont pas la structure classique de Lisp en cellules chaînées. Les listes ou les chaînes de listes (ensembles de listes) sont cependant traitées comme des séquences de Common Lisp.

Une liste "Propriété" est une liste spéciale composée de paires, chaque paire contenant un attribut et sa valeur associée, l'attribut devant être un symbole.

Les chaînes de listes sont encadrées par des guillemets.

Suit l'énumération des principales fonctions de contrôle.

- "Catch" et "throw" : ces fonctions, manipulées de manière relativement exceptionnelle, présentent un mécanisme puissant pour sortir d'un traitement complexe. La fonction "catch" évalue une forme, mais si un "throw" avec la même étiquette survient pendant l'évaluation de la "forme", ladite évaluation n'est pas menée à son terme et "catch" retourne l'évaluation du "résultat".

L'étiquette doit être définie comme une cible pour le transfert de contrôle. "Catch" et "throw" sont appairés. Plusieurs combinaisons de "catch" "throw" peuvent être utilisées avec différentes étiquettes. Aun "throw" correspond obligatoirement un "catch", si un "throw" est rencontré avec une étiquette inconnue une erreur est signalée.

- "Cond" : c'est un test conditionnel. Cette fonction évalue la "forme" qui est associée au pre- miertestqui retourne une condition vérifiée. La fonction retourne l'évaluation de la dernière de ses formes. Si aucune forme n'est présente alors une valeur simple de test est retournée. Lorsque chaque test produit un "nil" (rien n'est trouvé), la fonction "cond" retourne un "nil".

- "do" : cette fonction opère une itération générale, elle fournit un mécanisme généralisé d'itération avec un indice numérique arbitraire. Au début les variables sont liées à leur valeur initiale, ensuite la fonction effectue une boucle qui fonctionne ainsi :
. évaluation du test final. Si cet attribut est vérifié et "résultats" spécifié, évaluation de "résultats" et retour de la dernière évaluation. Si "résultats" n'est pas spécifié, retourne "nil".
. évaluation de chaque "forme".
. évaluation des expressions "par étape" de gauche à droite, chaque résultat est lié à l'indice variable correspondant. Si "étape" est omis, la variable reste inchangée.

- "dolist" : cette fonction, opère une itération dans les éléments d'une liste, elle assigne successivement chaque élément de la liste à une "variable" et évalue chaque " forme". Si "résultat" est omis, "nil" est retourné.

- "dotimes" : cette fonction permet de créer une boucle de zéro à (n-1 ) en opérant de la manière suivante. D'abord elle évalue le nombre de tour à effectuer, nombre qui doit être entier. Ensuite et successivement elle assigne les entiers de zéro au (nombre évalué - 1). Pour chaque itération, les instructions de chaque forme sont exécutées. Si le nombre évalué est égal à O ou à une valeur négative les instructions ne sont pas exécutées. Le résultat de cette fonction est l'évaluation de "résultat", si ce dernier est omis le résultat est "nil".

- "eval" : cette fonction évalue une expression SML dans l'environnement instantané. Une double évaluation est donnée car l'argument est évalué par SML avant d'être évalué par cette fonction.

- "exit" : cette fonction ferme l'environnement SML en terminant l'exécution.

- "for" et "mapfor" : ces fonctions procèdent à une itération dans une liste de valeurs. Elles affectent successivement une "variable" (non évaluée) à chacun des éléments de la liste de valeurs évaluées et exécutent les instructions. "For" retourne la valeur de l'évaluation de la dernière instruction de la dernière itération alors que "mapfor" construit une liste composée des valeurs successives "d'instruction" pour les itérations.

- "if' : test conditionnel dont la fonction est similaire de "cond" mais avec un niveau de parenthèses supprimé. Il exécute la partie "then" de la première condition vérifiée ou la partie "else" (si elle existe) si aucune condition préalable n'a été vérifiée.

- "let" : cette fonction annonce une variable locale en opérant comme suit :
. évaluation de toutes les valeurs initiales et liaison de ces valeurs aux variables correspondantes.
. évaluation séquentielle de chaque "forme".

Si aucune valeur initiale n'est associée à une variable, "nil" est initialisé. La valeur de retour de la fonction est celle retournée par la dernière "forme".

- "progn" : cette fonction exécute en séquence des instructions, elle évalue chaque "forme" et retourne le résultat de la dernière évaluation. Elle est utile lorsque plus d'une instruction est attendue, par exemple dans les parties "then" d'une instruction "if ".
- "quote" ou "/" : cette fonction a pour but d'éviter une évaluation. Elle retourne l'objet sans l'évaluer.
- "set" ou "setq" : cette fonction est utilisée pour assigner une valeur à une variable. C'est l'équi- i-valent de la fonction assignement des dialectes Lisp. Dans sa forme "setq" le premierargument n'est pas évalué alors qu'il est évalué dans sa forme "set". Ces deux fonctions évaluent le second argument et fixent la valeur du premier argument à la valeur résultante. La fixation des valeurs actives ne modifie pas leur valeur mais appelle sur la valeur une fonction prédéfinie.
- "Some" et "every" : ces deux fonctions provoquent une itération pour la recherche d'un attribut dans une liste. Pour cela, elles appliquent une fonction attribut à chaque élément d'une liste. "Some" applique la fonction jusqu'au retour d'une valeur non "nil" et retourne alors cette valeur, sinon à la fin retourne "nil". "Every" applique la fonction jusqu'au retour d'un valeur "nil" et retourne "nil", sinon à la fin elle retourne le dernier résultat obtenu. Le nombre de listes données devrait être égal au nombre d'arguments de la fonction appliquée. Ainsi la fonction est appliquée n fois lorsque n est la longueur de la première liste donnée.

Si l'une des autres listes a une taille inférieure à la première elle sera considérée comme une liste de la même taille que la première obtenue en ajoutant son dernier élément à la fin autant de fois qu'il est nécessaire. Si la première liste a une taille inférieure à une autre liste, seuls les premiers n éléments des autres listes sont référencés.
- "unless" : cette fonction, qui est un test conditionnel négatif, exécute chaque instruction et retourne la valeur de la dernière si la condition est évaluée à la valeur "nil", sinon "nil" est retourné. C'est l'inverse de la fonction "when " décrite plus loin.
- "unwind-protect" : cette fonction retourne l'évaluation de la "forme protégée", mais garantit une tentative de sortie par un "throw" interne, chaque "forme" sera évaluée en séquence avant d'obéir à "throw".
- "when" : cette fonction, test conditionnel positif, exécute chaque instruction et retourne la valeur de la dernière si la condition évaluée est vérifiée sinon "nil" est retourné.
- "while" : cette fonction, exécute chaque instruction en séquence jusqu'à une condition "nil". La fonction retourne toujours "nil".
- "with" ou "with-eval" : ces fonctions annoncent une variable locale. Ce sont des constructions utilisées pour annoncer et initialiser des variables qui sont propres à un groupe d'instructions. Les valeurs actives et les fonctions sont manipulées comme désiré, remettant à zéro leur valeur initiale après exécution de "with". Les valeurs sont évaluées séquentiellement. L'argument "contexte" est une liste de variables et de valeurs associées (liste propriété) qui peut être réutilisée dans plusieurs fonctions "with". La fonction "with-eval" évalue l'expression et ensuite l'utilise comme contexte. Compte tenu de la structure de l'interpréteur SML, "with" opère également avec des valeurs actives et des fonctions.

Suit l'énumération des principales fonctions d'en- trée/sortie.
- "close" : permet de terminer le traitement d'un objet dans un flux. Instruction inverse de l'instruction "open" décrite ci-après.
- "load" : cette fonction permet de charger et d'exécuter un fichier SML spécifié par "filename", en utilisant un chemin de recherche spécifié par une variable. Une première tentative est faite pour trouver un fichier désigné "filename sml" dans chaque répertoire du chemin spécifié. Ensuite, si le fichier n'est pas trouvé une recherche est faite pour un fichier désigné "filename". Si le nom de fichier comporte un caractère "/", ce nom est considéré être un nom de chemin absolu et le chemin de recherche n'est pas utilisé. Si une quelconque erreur survient au moment de la lecture du fichier, un message d'erreur est transmis et la lecture sui- i-vante du fichier est arrêtée. Si le fichier est trouvé, la fonction retourne le nom du fichier comme une chaîne. Si le fichier n'est pas trouvé et que le mot clé "if-does-not-exist" est spécifié, soit une erreur est signalée, soit la fonction "nil" est retournée. Si le fichier n'est pas trouvé et que le mot clé "if-does-not-exist" n'est pas spécifié, une erreur est signalée.
- "open" : permet d'ouvrir le traitement d'un objet dans un flux. Cette fonction crée un flux d'objets en ouvrant le fichier "filename" et retourne un objet du type "flux". Les mots clé et leurs valeurs correspondantes déterminent le type de flux à créer, le choix entre entrée, sortie ou les deux est spécifié par le mot clé ":direction" et la direction est l'une des suivantes :
   input : flux d'entrée (par défaut)
   : output : flux de sortie
   : io : flux bidirectionnel

Le mot clé : "if-exists" spécifie l'action à tenir si le fichier existe et est ouvert dans ":output" ou ":io", la valeur clé est l'une des suivantes :
: append : la position de départ est la fin du fichier (par défaut).
: overwrite : la position de départ est le début du fichier, les contenus du fichier courant, s'il y en a, ne sont pas écrasés.
: supersede : la position de départ est le début du fichier, les contenus du fichier courant, s'il y en a, sont remplacés.

Le mot clé ":type" spécifie le type de fichier, la valeur clé est l'une des suivantes :
: file: le flux créé est un fichier UNIX (par défaut) : string : le flux créé est une chaîne interne. Les fonctions d'entrée/sortie comme "read" ou "print" (décrites ci-après) peuvent être appliquées de même que les commandes de manipulation de chaîne.

Le mot clé ":buffered" spécifie si le registre tampon doit ou ne doit pas être vidé à chaque opération de sortie, la valeur clé est l'une des suivantes :

nil : ne doit pas être vidé,
t : doit être vidé (par défaut),
- "prin1" : cette fonction imprime des objets SML, chaque objet est spécifié dans sa forme naturelle, c'est à dire sans espacement et sans division entre lignes. La fonction retourne le dernier objet évalué. la sortie est "vidée" à la fin de l'appel, selon la valeur du mot clé ":buffered" dans la fonction "open".
- "print" : cette fonction permet l'impression d'une nouvelle ligne, et ensuite de chaque objet SML, chaque objet étant imprimé sans espacement ni division entre lignes. La fonction retourne le dernier objet évalué. La sortie est également "vidée" à la fin de l'appel selon la valeur du mot clé ":buffered" dans la fonction "open".
- "*print-readably*": permet le contrôle de la représentation de l'impression. La fonction ^{*}print-readably^{*} est une variable. Si sa valeur est "nil" (par défaut) toute sortie peut être lue, c'est-à-dire que des caractères spéciaux sont interprétés pour améliorer la lisibilité. Si sa valeur est "true", toute sortie est imprimée comme si elle contenait des caractères spéciaux, sauf pour les séquences d'échappement qui sont toujours interprétées sans tenir compte de la valeur de ^{*}print-readably^{*}.
- "^{*}print-level^{*}" : permet le contrôle de l'impression de la profondeur des listes. Cette fonction est une variable qui contrôle la profondeur maximale des listes à imprimer.
- "provide" et "require" : ces fonctions gèrent le chargement d'un fichier. Elles aident à déterminer si un fichier SML à été chargé de manière à éviter de le charger une seconde fois. L'argument commun "file" doit être un symbole qui définit le fichier utilisant son nom d'impression. Le symbole "file" est ensuite fixé à la valeur "nil" par l'une ou l'autre fonction. La fonction "require" cherche si le fichier est présent et donc chargé dans SML. Si le fichier n'est pas présent alors soit il est chargé, soit rien n'est fait. La confirmation qu'un fichier a déjà été chargé est donné par la fonction "provide". La fonction "provide" confirme que le fichier a été chargé. Cette fonction est généralement appelée dans le fichier chargé.
- "read" : permet la lecture et l'interprétation d'une chaîne. Cette fonction lit la prochaine expression sur le flux d'entrée si cela est spécifié ou sinon sur "l'entrée standard", l'analyse et la retourne. A la fin du fichier la fonction exécute un "throw" vers l'étiquette "fin de fichier".
- "read-char" : cette fonction lit un caractère sur le flux d'entrée si cela est spécifié ou alors sur "l'entrée standard" et elle le retourne. Cette fonction est utile pour les fichiers binaires dans lesquels les octets peuvent être lus de cette manière.
- "read-line" : cette fonction lit une chaîne de caractères sur le flux d'entrée si cela est spécifié ou sinon sur "l'entrée standard" et elle la retourne ne tenant pas compte de la nouvelle ligne à la fin. Ala fin du fichier, elle exécute un "throw" vers l'étiquette "fin de fichier".
- "^{*}standard-error^{*} ou ^{*}standard-input^{*} ou ^{*}standard-output^{*}" : fonctions utilisées pour les flux standards. Elle correspondent à des variables globales, sinon sont fixées par défaut à des valeurs associées. Si une variable est fixée à la valeur "nil", elle est remise à sa valeur par défaut.
- "write-char" : cette fonction écrit un caractère sur le flux de sortie si cela est spécifié ou sinon sur la "sortie standard" et elle le retourne. Cette fonction est utile pour créer des fichiers binaires dans lesquels les octets peuvent être écrits de cette manière.
- "write-line" : cette fonction écrit une chaîne de caractères sur le flux de sortie si cela est spécifié ou sinon sur la "sortie standard" et la retourne.

Suivent les définitions des principaux symboles.
- "defconstant" : cette fonction annonce et fixe une variable à une valeur donnée qui ne peut être référencée dans une fonction "setq" ou "let".
- "defvar" : cette fonction annonce que la variable spécifiée est une variable globale. Les variables globales peuvent être lues dynamiquement par des constructions "let".
- "documentation" : fixe ou retrouve une documentation. Si "string" n'est pas spécifié, cette fonction retrouve la documentation pour le symbole spécifié. Si la documentation n'existe pas, la valeur "nil" est retournée. Si "string" est spécifié, il est associé à "symbol", une erreur apparaissant si le symbole n'est pas défini. La "documentation" peut être définie par les fonctions "defvar", "defconstant", "defun" et "defmacro".
- "gensym" : cette fonction génère et retourne un nouveau symbole. Son nom est composé de la lettre G suivie d'un nombre incrémenté à chaque appel de fonction.
- "intern" : cette fonction crée et retourne un symbole (d'une chaîne) dont le nom est "string".

Si un symbole avec un même nom est trouvé, il est retourné. Cette fonction est utile pour créer des "atomes" avec des caractères spéciaux incorporés comme " ' " ou des blancs (espaces).
- "makunbound" : cette fonction rend un symbole indéfini de telle manière que si la fonction "boundp" (décrite ci-après) lui est appliquée, la valeur "nil" est retournée.

Suivent les définitions des principaux attributs :
- "/=" : c'est le test d'inégalité des objets qui retourne la valeur "true" si un objet 1 est différent d'un objet 2, sinon retourne la valeur "nil".
- "<" : c'est le test de stricte infériorité qui compare deux nombres ou deux chaînes et retourne la valeur "t" si le premier argument est inférieur ou égal à un second, sinon la valeur "nil" est retournée. Les chaînes sont comparées alphabétiquement.
- "<=" : test d'infériorité qui compare deux nombres ou deux chaînes et retourne la valeur "t" si le premier argument est inférieur ou égal au second, sinon la valeur "nil" est retournée. Les chaînes sont également comparées alphabétiquement.
- ">" : test de stricte supériorité qui compare deux nombres ou deux chaînes et retourne la valeur "t" si le premier argument est supérieur et non égal au second, sinon la valeur "nil" est retournée, les chaînes étant comparées alphabétiquement.
- ">=" : test de supériorité qui compare deux nombres ou deux chaînes et retourne la valeur "t" si le premier argument est supérieur ou égal au second, sinon la valeur "nil " est retournée, les chaînes étant comparées alphabétiquement.
- "and" : c'est un "et logique" entre expressions, qui évalue chaque "forme" de gauche à droite. Si une forme est évaluée à la valeur "nil" la fonction retourne cette valeur "nil" sinon la valeur "t" est retournée. Si aucun argument n'est spécifié la fonction retourne la valeur "t".
- "boundp" : cette fonction teste si un atome a déjà été défini. Elle retourne le symbole évalué si il a été défini, sinon la valeur "nil " est retournée. Cette fonction est vérifiée si la variable appelée "symbole" a une valeur.
- "compare" : cette fonction impose la comparaison entre deux nombres ou deux chaînes et retourne une des valeurs suivantes :
   . un nombre strictement positif si le premier argument est supérieur au second.
   . zéro si le premier et le second arguments sont égaux.
   . un nombre strictement négatif si le premier argument est inférieur au second.
- "eq" : test de l'égalité stricte entre deux objets qui est vérifié seulement si les deux objets sont situés au même emplacement de la mémoire.
- "equal" ou "=" : test de l'égalité entre deux objets qui retourne la valeur de l'objet 1 si elle est la même que celle de l'objet 2, sinon la valeur "nil" est retournée. L'égalité des listes est vérifiée en testant l'égalité de chacun de leurs éléments.
- "()" ou "nil" : c'est la valeur "nil" du langage Lisp classique dans lequel un objet est "vrai" si il n'est pas "nil".
- "not" : c'est un "non logique", la valeur "t" est retournée si l'objet a la valeur "nil", sinon c'est la valeur "nil " qui est retournée.
- "or" : c'est un "ou logique" entre des expressions. Il évalue chaque forme de gauche à droite. Si une forme est évaluée à une valeur "non nil", cette évaluation est retournée. Si toutes les formes sont évaluées à la valeur "nil" la dernière évaluation est retournée.
- "t" : c'est la valeur logique vraie.
- "typep" : c'est l'attribut "type des données". Cette fonction retourne "type" si l'objet est de ce type, sinon la valeur "nil" est retournée.

Suivent les définitions des fonctions de listes :
- "append" : cette fonction permet de construire et retourner un nouvelle liste ou nouvelle chaîne par concaténation des arguments.
- "copy" : cette fonction copie un objet SML, elle retourne une copie de l'objet qui doit être une liste.
- "length" : cette fonction retourne le nombre d'éléments d'une liste ou le nombre de caractères d'une chaîne.
- "list" : cette fonction construit et retourne une liste d'arguments évalués.
- "list-get" ou "list-put" ou "list-put!" : ces fonctions permettent d'obtenir ou de fixer une valeur dans une liste. "list-get" retourne une valeur dans une liste". "list-put!" change la liste et la retourne alors que "list-put" retourne une nouvelle liste mise à jour. La valeur peut être spécifiée par un nombre (position) ou un attribut (symbole). Si un attribut est utilisé la liste est considérée être une liste propriété et l'élément référencé de la liste est celui qui est juste après le symbole dans la liste. Si c'est la position qui est utilisée, elle se réfère à la position de l'élément de la liste en partant de zéro. Si la "position" est supérieure à celle du dernier membre de la liste :
   . "list-get" retourne la valeur défaut si elle est spécifiée, sinon la valeur "nil".
   . "list-put" et "list-put!" insèrent le nouveau membre de la liste dans la position correcte en remplissant les positions non spécifiées avec des valeurs "nil" si cela est nécessaire. Si un "attribut" ne correspond pas à un attribut existant , "list-get" retourne la valeur par défaut si elle est spécifiée, sinon la valeur "nil".
- "list-remove" ou "list-remove!" : ces fonctions permettent de retirer un ou plusieurs éléments d'une liste. "list-remove!" change la liste et la retourne alors que "list-remove" retourne une nouvelle liste mise à jour. Quand un "attribut" est utilisé la liste est considéré être une liste propriété. Dans ce cas, l'élément attribut ainsi que celui qui le suit dans la liste sont retirés.

Si la "position" est utilisée, elle se réfère à la position de l'élément de la liste en partant de zéro. Si "l'attribut" ne s'appaire pas avec un attribut existant ou si la "position" est supérieure à celle du dernier membre de la liste, la liste est inchangée.

- "make-list" : cette fonction construit et retourne une liste contenant la taille des éléments, dans laquelle chaque élément est initialisé par "form", si cet attribut est présent sinon par "nil".
- "map" : cette fonction applique une fonction" aux éléments de la ou des listes spécifiées, retournant une liste ou une chaîne selon la valeur du "type de résultat" qui détermine ce qui est construit. La fonction appliquée doit prendre autant d'arguments qui le nombre N d'arguments de liste fournis. Les N listes doivent avoir la même longueur L. La fonction "map" retourne une liste ou une chaîne de longueur L ayant comme éléments le résultat de l'appel de la fonction avec les L éléments de la liste, si une liste est spécifiée, ou si pour plusieurs listes les premiers éléments de chaque liste sont spécifiées, alors les seconds éléments de chaque liste sont retournés et ceci jusqu'à L éléments.
- "maphash" : cette fonction applique une "fonction" avec deux arguments, chaque clé et la valeur correspondante dans la liste propriété. Elle retourne toujours la valeur "nil". Elle peut être également utilisée avec un tableau.
- "nconc" : cette fonction exécute la concaténation d'une liste 1 avec chaque liste. Elle modifie physiquement une séquence d'une liste ou d'une chaîne et retourne la liste 1.
- "position" : dans la première forme la liste est analysée avec l'attribut "equal". Si un élément "item" est présent la fonction retourne son indice dans la liste en partant de zéro, sinon elle retourne la valeur "nil". Dans la seconde forme l'apparition d'un élément "substring" est recherché dans la chaîne. Si cet élément est présent, la fonction retourne la position du caractère à laquelle elle commence, sinon la valeur "nil" est retournée.
- "reverse" : cette fonction retourne une nouvelle liste avec les mêmes éléments mais dans l'ordre inverse.
- "sort" : cette fonction classe la liste dans l'ordre croissant au moyen de la fonction "comparison".

La fonction nommée par "comparison" est appelée avec deux éléments à comparer et doit retourner un entier. Sa valeur sera négative, nulle ou positive selon que le premier argument est plus petit, égal ou plus grand que le second.

- "subseq" : cette fonction retourne une sous-liste à partir de l'élément à la position départ ("start") jusqu'à l'élément en position fin ("end"). "Start" et "end" sont des nombres partant de zéro. Si le nombre d'éléments indéxés est supérieur à la table de la liste, la sous-liste retournée est fixée à la valeur "nil". Cette fonction peut également être utilisée avec une chaîne.

Suivent les définitions des fonctions de chaînes et de tableaux :
Comme une chaîne est traitée comme une liste de caractères, des fonctions de listes peuvent être également utilisées pour des chaînes, telles que : "append", " length", "map", "max", "nconc", "position", " subseq".

- "match" : cette fonction permet d'appairer et d'extraire des sous-chaînes à partird'une chaîne SML.
- "string-downcase" ou "string-upcase" : ces fonctions retournent une copie d'un chaîne après conversion.

De même, un certain nombre de fonctions de listes peuvent être utilisées pour traiter les tableaux, telles que : "list-get", "list-put", "list-put!", "list-remove!", "maphash". Un objet d'un tableau est créé en utilisant la fonction "coerce" appliquée à une liste propriété.

Suivent les définitions des macro définitions :
- "backquote" ou " "' : cette fonction crée une copie d'une liste spécifiée utilisant cette dernière comme un gabarit pour la création de la copie.
- "defun" : permet de définir une fonction SML. C'est la manière habituelle de créer une nouvelle fonction définissant le nom de la fonction en utilisant les paramètres déclarés dans la liste "lambda" et dans la "forme".
- "defmacro" : cette fonction définit une macro SML. c'est l'utilisation normale pour définir une nouvelle macro définissant le nom de la macro en utilisant les paramètres déclarés dans la liste "lambda"" et dans la "forme".
- "lambda" : cette fonction définit une expression "lambda" qui est la forme de base pourdé- terminer une fonction anonyme en utilisant des expressions "lambda". Une expression "lambda" est composée d'un symbole lambda, d'un liste lambda et du corps de l'expression lambda. Une liste lambda spécifie les paramètres. Lorsqu'une fonction est appelée, ses arguments sont appairés avec les paramètres de la liste lambda correspondante. Si des paramètres requis sont spécifiés, les arguments correspondants doivent être présents lorsque l'expression lambda est appliquée. Une liste "lambda" peut utiliser des mots clé, commençant par le symbole & et définis comme suit :
   & optional : paramètres optionnels ; si ces arguments ne sont pas utilisés, ils sont liés à la valeur initiale si elle existe, sinon à la valeur "nil".
   & rest : paramètres de repos , quand tous les paramètres requis et optionnels sont liés alors tout argument suivant est créé dans une liste et est lié aux paramètres de repos.
   & key : paramètres de mots-clé ; ce sont des arguments constitués de paires comprenant le mot-clé appelé et sa valeur.
   & aux : ce sont des variables locales qui ne sont pas vraiment des paramètres ; c'est l'équivalent de la fonction "let".
- "lambdamacro" : cette fonction définit une expression lambda macro qui est la forme de base pour définir une macro anonyme. Si des paramètres requis sont spécifiés les arguments correspondants doivent être présents lorsque l'expression lambda est appliquée. Une liste "lambdamacro" peut utiliser des mots clé commençant par le symbole & et définis de manière équivalente à ceux de la liste "lambda" : & optional, & rest, & key et & aux.

Suit la définition de quelques opérateurs numériques et autres opérateurs :
- "+" : opérateur d'addition de nombres, il peut également être utilisé comme opérateur de concaténation pour des listes ou des chaînes. Le type de résultat est déterminé à partir du type du premier argument : () pour une liste, " pour une chaîne et 0 pour un nombre.
- "^{*}" et "/" : opérateurs arithmétiques qui retournent respectivement le modulo, produit et quotient des arguments.
- "-" : opérateur de différence arithmétique.
- "logand", "logor", "lognot", "logxor" : opérateurs qui correspondent respectivement aux opérations de "et logique", "ou logique", "non logique" et "ou exclusif logique".
- "max" et "min" : opérateurs qui retournent respectivement la valeur maximale ou minimale d'une liste de nombres ou de chaînes.
- "random" : opérateur qui génère un nombre aléatoire.
- "coerce" : a pour fonction de spécifier un type, convertir le type d'un objet en celui spécifié par le "type de résultat"
- "type-of" : a pour fonction de retourner le type SML interne de l'objet.
- "!" ou "!!" : exécutent une commande d'interpréteur, "! " exécute la commande donnée comme une chaîne avec ses arguments donnés et n'attend pas la fin de l'opération, alors que "!!" retourne un flux d'entrée/sortie en relation avec les commandes d'entrée et sortie, cette commande étant supprimée si le flux est coupé.
- "^{*}application-class^{*}" : c'est une constante de chaînes qui indique la classe de l'application en cours, pour une application SML la valeur est "SML".
- "^{*}application-name^{*}" : c'est une constante de chaînes qui indique le nom de l'application en cours.
- "command-line-args" : cette fonction retourne une liste de chaînes qui représente les arguments transmis par l'interpréteur à SML lors du démarrage.
- "get-internal-run-time" : cette fonction permet de retourner la valeur du temps d'exécution en millisecondes, si aucun argument n'est fourni la valeur retournée correspond au temps passé, sinon la valeur dépend d'un des mots-dé :
   : real : le temps passé depuis le démarrage de l'application SML (par défaut)
   : user : le temps CPU utilisé pendant l'exécution d'instructions SML
   : system : le temps CPU utilisé par le système pour le compte de SML.
- "getenv" : si le nom de variable de la chaîne est le nom d'une variable sortie de l'interpréteur, cette fonction retourne cette valeur comme une chaîne, sinon la fonction retourne la valeur "nil".
- "setenv" : cette fonction fixe le nom d'une variable de l'interpréteur à une valeur, ces deux arguments doivent être des chaînes.

De plus il est possible avec SML de différer l'évaluation d'expressions. L'évaluation surviendra alors après un temps spécifié et lorsque toute requête aura reçu sa réponse. La représentation interne du temps pour les fonctions SML est la milliseconde.

- "eval-after" : l'évaluation des expressions sera faite après une certaine durée de temps, cette fonction s'effectue en deux phases :
   . lorsque "eval-after" est appelée, chaque forme à évaluer par la suite est sauvegardée avec son contexte.
   . après la durée de temps spécifiée, le contexte est lié et chaque forme évaluée.

Cette fonction retourne un objet du type "timer" qui peut être remis à zéro par la fonction "remove-timer" décrite ci-après.
- "eval-every" : cette fonction est similaire à la précédente mais effectue des évaluations répétitives, elle peut bien sûr être remise à zéro par la fonction "remove-timer".
- "remove-timer" : cette fonction supprime un objet de type "timer" construit par l'une des fonctions "eval-after" ou "eval-every".

SML utilise également des outils de mise au point en particulier les fonctions suivantes :
- "hashinfo" : cette fonction fournit des statistiques sur le stockage d'atomes. Les informations retournées sont le nombre de symboles, le nombre d'insertions dans le tableau et le nombre de collisions.
- "meminfo" : cette fonction fournit et imprime l'état de l'allocateur de mémoire utilisée par SML.
- "oblist" : cette fonction retourne et imprime les noms des atomes SML déjà définis. Si le symbole "string" n'est pas spécifié, tous les noms définis sont retournés, sinon seuls les noms contenant le symbole "string" sont retournés.
- "stack-print-level" : cette fonction fournit le nombre de structures d'une pile imprimées en erreur.
- "trace-untrace" : la fonction "trace" retourne la liste des fonctions exécutées jusqu'à sa requête. La fonction "untrace" retourne la liste des fonctions non encore exécutées jusqu'à la requête, s'il en existe, sinon retourne une valeur "nil"

Concernant le jeu de fonctions MIF, et comme cela a été dit précédemment, ce dernier permet d'accéder à la bibliothèque externe MIL qui sert à son tour d'interface avec les services de gestion des réseaux et systèmes d'informations dans le cadre d'échange d'informations entre une application et un gestionnaire d'objets. Compte tenu des concepts de programmation relatifs aux services de gestion des réseaux et systèmes d'informations, par exemple CM IS, une application SML doit pouvoir réaliser les opérations suivantes :
1.initialisation des services,
2.attente d'une action d'un utilisateur,
3. émission d'une requête pour les services de gestion des réseaux et systèmes d'informations,
4.établissement d'une procédure de rappel pour ladite requête,
5.exécution de la procédure de rappel lorsque la confirmation de requête arrive,
6.répétition à partir de l'étape 2 jusqu'à la dernière requête de l'utilisateur,
7.fin de l'application.

Le jeu de fonctions XAF, quant à lui, permet d'accéder à la bibliothèque XML qui dispose de composants pour développer et gérer des interfaces utilisateur graphiques, par exemple X/Motif.

L'architecture d'un système du type X Window est basée sur le modèle client-serveur.

Le serveur gère tous les dispositifs d'entrée et de sortie (par exemple, la souris), il crée et manipule les fenêtres sur l'écran, produit texte et graphiques. L'application qui utilise les facilités offertes par le serveur est appelée client. Le client communique avec le serveur après connexion sur le réseau au moyen de protocoles particuliers. Le serveur communique avec les clients en envoyant des "événements" vers les applications client, par exemple, de manière triviale, lorsque le serveur génère un événement en réponse à une action d'un utilisateur sur la souris. Dans le présent contexte, cela signifie que ce type d'événement est pris en charge par l'interpréteur SML et qu'une fonction de rappel qui lui est spécifique est exécutée.

Une application SML utilisant les services de gestion des réseaux et systèmes d'informations, comme CMIS, en même temps que les bibliothèques externes permettant de développer et gérer des interfaces utilisateur graphiques, comme X/Motif, devra réaliser les opérations suivantes :
1.initialisation des deux types de services,
2.création et représentation de composants d'interface utilisateur appelés "widgets",
3.établissement de procédures de rappel pour des interactions utilisateur,
4.attente d'une action d'un utilisateur,
5.émission d'une requête, au moyen d'une procédure de rappel, pour les services de gestion des réseaux et systèmes d'informations,
6.établissement d'une procédure de rappel pour ladite requête,
7.exécution de la procédure de rappel lorsque la confirmation de requête arrive,
8.répétition à partir de l'étape 4 jusqu'à la dernière requête de l'utilisateur,
9.fin de l'application.

Le jeu de fonctions GAF permet à son tour d'accéder à la bibliothèque GOL autorisant les applications utilisant les objets graphiques. De telles applications permettent de présenter et d'éditer des objets graphiques à deux dimensions à partir de bibliothèques graphiques qui peuvent être intégrées aux interfaces utilisateur existantes comme par exemple X/Motif, MS-WINDOWS, Postscript, etc, ....

Le rôle des fonctions SAF est d'autoriser l'accès à une bibliothèque SLL spécifique d'un langage structuré, comme par exemple SQL, servant à son tour d'interface avec des bases de données relationnelles comme par exemple, INGRES (marque déposée par Ingres Co.), ORACLE (marque déposée par Oracle Corporation),...

Les fonctions SAF offrent deux niveaux de fonctionnalités.

Le premier permet de construire dans l'environnement SMLdes requêtes standards dans le langage structuré, les fonctions utilisées à ce niveau n'interagissant pas avec le serveur de base de données. Au second niveau, les fonctions utilisées interagissent avec le serveur de base de données pour autoriser, entre autres, la connection ou la déconnection audit serveur, la mise à jour lorsque des changements sont désirés.

Des fonctions SAF spécifiques SML permettent de réaliser l'interface avec la bibliothèque SLL, les principales étant décrites sommairement ci-après :
- "sql-login" : permet la connection à un serveur de base de données identifié par le paramètre "connectid". Ce paramètre est une chaîne spécifiant le nom du serveur de la base de données. Si la connection est réalisée, la fonction retourne la valeur "t" sinon la fonction "sql-error" (décrite ci-après) est appelée et la valeur "nil" est retournée.
- "sql-logout" : permet la déconnection du serveur de base de données. Cette fonction termine l'unité de travail logique courante. Si une unité est en cours, la fonction fixe tous les changements opérés durant cette unité de travail et la déconnection est opérée.
- "sql-build-delete" : permet de créer une requête de suppression comme une chaîne.
- " sql-build-insert " : permet de créer une requête d'insertion comme une chaîne.
- "sq!-bui!d-se!ect" : permet de créer une requête de sélection comme une chaîne sous la forme d'une liste.
- "sql-build-update" : permet de créer une requête de mise à jour comme une chaîne.
- "sql-oper" : permet de créer une proposition conditionnelle comme une chaîne.
- "sql-exec" : soumission d'une requête au moyen du paramètre "command" à un serveur de base de données pour exécution.

Le paramètre "command" peut être soit une chai- ne, soit un résultat retourné par l'une des fonctions " sql-build-xxx" précédentes. Cette fonction ne peut être utilisée qu'après connection effective avec le serveur de base de données.

- "sql-commit" : termine une unité de travail en fixant les changements opérés pendant cette unité de travail.
- "sql-rollback" : termine une unité de travail sans tenir compte des changements opérés pendant cette unité de travail.
- "sql-error" : cette fonction est appelée en cas d'insuccès d'une requête.
- "sql-get-error" : retourne le dernier message du serveur de base de données en réponse à la dernière requête.

De manière générale, les types des données dans le langage structuré ont leurs équivalents en langage SML, il existe donc une correspondance entre ces deux langages. De même les noms de tableaux et d'attributs en langage structuré sont représentés par des atomes en langage SML (voir langage Lisp par exemple), les valeurs ayant bien entendu leur correspondance dans ces deux langages.

Il est en outre possible d'écrire des extensions à SML. Pour cela les nouvelles fonctions doivent être écrites en langage type C et ensuite compilées et enchaînées aux bibliothèques de SML.

Il est alors obtenu un nouvel interpréteur SML étendu. De manière générale, le développement d'une extension SML entraîne les étapes suivantes :
- développement d'un code en langage de type C pour la primitive qui doit être appelée chaque fois qu'une référence est faite à un nouveau nom SML.
- réalisation de l'association entre le nom de la nouvelle fonction SML et le nom de la primitive dans la bibliothèque externe compilée.
- construction du nouvel interpréteur SML en liant toutes les bibliothèques requises.

Pour conclure, un tel langage de programmation permet de réduire considérablement le temps de développement d'une application. Ainsi, le langage utilisé selon l'invention dans lequel le typage porte sur le contenu des variables plutôt que sur les variables permet de réaliser des interfaces d'accès à des serveurs qui sont simplifiées de manière très significative et facilitent la programmation générique, la structure des données étant manipulée de manière directe sans condition. En effet, les variables SML n'ont pas de type car elles sont supposées toutes exister à un état indéterminé (valeur "nil") et c'est au moment d'une affectation que le type est en même temps fixé autorisant ainsi une programmation générique. Ceci un puissant avantage relativement aux langages de type C pour lesquels les types sont compilés, ce qui implique leur connaissance avant une programmation. De plus, un tel langage, qui a un caractère ensembliste et facilite l'interfaçage avec divers serveurs d'informations, est avantageusement utilisé comme langage de très haut niveau pour des applications de gestion. Ainsi il permet par exemple d'accéder à une bibliothèque propre à un langage structuré tel que SQL en respectant le caractère ensembliste dudit langage. En outre il permet de créer des interfaces respectant le caractère arborescent de plusieurs serveurs comme par exemple pour les plateformes d'administration de réseaux.

Un autre important avantage vient de ce que le code exécutable peut être facilement et naturellement modifié par lui-même pour s'adapter aux types de données reçues. Ainsi, une application peut envoyer une requête vers le réseau pour demander la valeur d'un objet administratif sans connaître sa structure puis construire dynamiquement des fonctions d'affichage et de mise à jour adaptées à la structure de l'objet reçu. En effet, comme cela a été vu précédemment, le fait qu'il n'y ait pas de différence entre le programme et les données a pour conséquence que le programme peut se modifier lui-même et entraîne qu'une application se modifie dynamiquement en fonction des données qu'elle manipule.

En outre, l'utilisation d'un langage comme SML ayant une représentation similaire pour les programmes et les données est particulièrement aisée et avantageuse. En effet, un tel langage offre une grande souplesse d'utilisation, une extrême flexibilité et une puissance considérable permettant d'envoyer un fragment de code ayant un sens par lui-même, par exemple une transaction, offrant un équilibrage de charge entre processeurs régulés dynamiquement et autorisant une modification dynamique du code pendant l'exécution. Selon cette utilisation le code est ici véhiculé avec une facilité et une souplesse identiques à un simple transfert de données.

## Revendications

1. Utilisation d'un langage dans lequel le typage porte sur le contenu des variables plutôt que sur les variables et que, en outre, permet de manipuler des structures complexes telles que des ensembles ou des arbres dans des programmes d'applications du type programmes de gestion d'un réseau destinés d'une part à créer des interfaces d'accès à des serveurs en autorisant une programmation générique et d'autre part à créer des interfaces respectant le caractère ensembliste de bases de données relationnelles et le caractère arborescent d'une pluralité de serveurs, chaque machine du réseau possédant un interpréteur dudit langage.

2. Utilisation de Lisp comme langage selon la revendication 1.

3. Interpréteur de langage d'une machine selon la revendication 1 ou 2, caractérisé en ce qu'il est principalement constitué d'un noyau pour traiter le programme à exécuter en s'appuyant aussi bien sur des services internes : évaluateur, gestion mémoire, que sur le code exécutant les fonctions primitives du langage, d'une interface programmatique documentée entre le noyau et le code exécutant les fonctions primitives pour autoriser l'accès à une pluralité de services et faciliter l'extension du langage et de l'interpréteur à de nouvelles fonctions primitives.

4. Interpréteur de langage selon la revendication 3, caractérisé en ce qu'il comporte un jeu de fonctions mettant en oeuvre les fonctions primitives, jeu de fonctions constitué d'une part de fonctions propres au langage ayant une représentation similaire pour les programmes et les données et d'autre part de fonctions étendues permettant l'accès à la pluralité de services.

5. Interpréteur du langage selon la revendication 4, caractérisé en ce que, lors d'une application demandant l'accès à des services de gestion de réseaux et systèmes d'informations, il procède aux opérations suivantes :
- 1.initialisation des services,
- 2.attente d'une action d'un utilisateur,
- 3.émission d'une requête pour les services de gestion des réseaux et systèmes d'informations,
- 4.établissement d'une procédure de rappel pour ladite requête,
- 5.exécution de la procédure de rappel lorsque la réponse à la requête arrive,
- 6.répétition à partir de l'étape 2 jusqu'à la dernière requête de l'utilisateur,
- 7.fin de l'application.

6. Interpréteur du langage selon la revendication 4, caractérisé en ce que, lors d'une application demandant l'accès d'une part à des services de réseaux et systèmes d'informations de gestion et d'autre part à des bibliothèques fournissant des composants pour le développement et la gestion d'interfaces utilisateur graphiques, il procède aux opérations suivantes :
- 1.initialisation des deux types de services,
- 2.création et représentation de composants d'interface utilisateur appelés "widgets",
- 3.établissement de procédures de rappel pour des interactions utilisateur,
- 4.attente d'une action d'un utilisateur,
- 5.émission d'une requête, au moyen d'une procédure de rappel, pour les services de gestion des réseaux et systèmes d'informations,
- 6.établissement d'une procédure de rappel pour ladite requête,
- 7.exécution de la procédure de rappel lorsque la réponse à la requête arrive,
- 8.répétition à partir de l'étape 4 jusqu'à la dernière requête de l'utilisateur,
- 9.fin de l'application.
